# EUROPEAN PATENT SPECIFICATION

(11) **EP 3 305 662 B1**
(45) Date of publication and mention of the grant of the patent: **02.12.2020**
(21) Application number: 17195279.9
(22) Date of filing: 06.10.2017
(51) Int. Cl.: B64D 11/06, B64D 11/00, A01K 1/02, A47B 85/00, B60N 2/28, B60R 11/02

(54) **AIRCRAFT CABIN ARRANGEMENT WITH DEDICATED SEATING CLASSES**
FLUGZEUGKABINENANORDNUNG MIT ZUGEORDNETEN SITZKLASSEN
AGENCEMENT DE CABINE D'AÉRONEF COMPORTANT DES CATÉGORIES DE SIÈGES DÉDIÉS

(30) Priority: 07.10.2016 US 201662405469 P
(43) Date of publication of application: 11.04.2018
(73) Proprietor: B/E Aerospace, Inc., Wellington, FL 33414 (US)
(72) Inventor: JOHNSON, Glenn A., RURAL HALL, NC North Carolina 27045 (US); POZZI, Alexander N., WINSTON-SALEM, NC North Carolina 27104 (US); UDRISTE, Daniel I., CORAL SPRINGS, FL Florida 33076 (US); VELET, Alex, WINSTON-SALEM, NC North Carolina 27103 (US)
(74) Representative: Algemeen Octrooi- en Merkenbureau B.V.

(56) References cited:
- DE-A1- 4 125 783
- DE-A1-102011 115 158
- FR-A1- 2 280 531
- JP-A- 2005 245 388
- US-A- 3 588 172
- US-A- 5 344 212
- US-A1- 2005 087 650
- US-A1- 2005 103 935
- US-A1- 2005 242 238
- US-A1- 2006 058 107
- US-A1- 2006 261 212
- US-A1- 2009 200 422
- US-A1- 2013 256 456
- Jim Dobson: "Banning Children in First Class: Airlines Move to Create a Family Zone on Long-Haul Flights", , 15 October 2015 (2015-10-15), XP055437525, Retrieved from the Internet: URL:https://www.forbes.com/sites/jimdobson /2015/10/15/banning-children-in-first-clas s-airlines-move-to-create-a-family-zone-on -long-haul-flights/#5bd2e19d49a7 [retrieved on 2017-12-22]
- Anonymous: "Amazon.com: Lego Tray, Building Brick Tray, Personalized children's tray: Handmade", , 27 March 2016 (2016-03-27), XP055437768, Retrieved from the Internet: URL:https://www.amazon.com/Lego-Building-B rick-Personalized-childrens/dp/B018H6XHC6 [retrieved on 2017-12-22]

## Description

### BACKGROUND

Aircraft passenger cabins are typically divided into seating classes equipped with amenities commensurate with fares paid. For example, a cabin can be configured with premium and economy seating classes. Premium seating classes can include larger seats, greater seat adjustability, additional leg room, personal video monitors, etc. Economy seating classes can include limited seat adjustability, shared armrests, shared video monitors, etc. Regardless of seating class type, passengers expect a degree of privacy and peace during flight.

Infants and small children can become impatient and bored while travelling, particularly during a long flight. Infants and small children can also have special needs during a flight, for example, nursing, feeding, diaper changes, etc., that require additional space beyond that available in a conventional seating class. Any noise, behavior, and needs that exceed an expected/acceptable level during a flight can be disruptive to other passengers, particularly those in premium seating classes and those travelling without children. Disruptions are undesirable and unwanted by passengers, and can lead to conflict between passengers and added stress in families traveling with infants and small children.

United States patent application US 2005/242238A1 discloses the development of "The Parent Plane", which will be an asset to all parties involved, the parents, the children, the passengers, and the airlines. The development of idea involved will allow parents and children to travel by air no matter what the age of the child. Separating the plane into different areas will accommodate all ages. The parents and children will be more at ease with air travel knowing there are trained personnel on board and that they will not be aggravating other passengers. Other passengers will be more at ease knowing that they can actually have a "peaceful" flight with no children being on board, and the airline will greatly profit by offering this service to the public.

To provide an on-vehicle storage container capable of being mounted on a seat in such a manner that a storage container body is maintained in a horizontal state, regardless of what kind of seat cushion, namely, what kind of seat, is used for mounting the container thereon, Japanese patent application JP2005 245388 A1 discloses an on-vehicle storage container, in which the storage container body is removably attached to a child seat-mounting IOS-FIX bar through an inclining mechanism and a holding mechanism.

Pets have needs that cannot be addressed in conventional seating classes. For example, airlines require pets to remain in pet carriers during flight, and pet carriers to remain stowed in under-seat stowage space. These requirements not only consume the limited available stowage space for a travelling passenger, but can cause anxiety in pets that can lead to barking, illness and other disruptions. Airlines also limit the number of pets per flight to minimize the impact on passengers sensitive to allergens and overall noise level in the cabin, thus an airline may not be able to accommodate every passenger wanting to travel with a pet.

In view of the above, what is needed is a cabin arrangement equipped to accommodate the needs of all passengers wanting to travel with pets, in a way that minimizes disruptions between passengers travelling with and without pets. Such a cabin arrangement would provide a degree of separation and privacy between passengers seated inside and outside of dedicated family and pet seating classes, provide additional room being configured to cater to the specific needs of families and pet owners, among other features and advantages.

### SUMMARY

In one aspect, embodiments of the inventive concepts disclosed herein are directed to an aircraft cabin arrangement according to claim 1.

In another aspect, embodiments of the inventive concepts disclosed herein are directed to a method of minimizing disruptions between aircraft passengers travelling with pets and aircraft passengers travelling without pets, the method is defined in independent method claim 7.

Preferred embodiments of the invention are defined in the dependent claims.

### BRIEF DESCRIPTION OF THE DRAWINGS

Implementations of the present invention may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a perspective view of a family seating class in an aircraft cabin arrangement;
FIG. 2 is an overhead perspective view of the family seating class of FIG. 1;
FIG. 3 details deployable tables in the family seating class;
FIG. 4 details seatback tablet holders in the family seating class;
FIGS. 5A-C illustrate an infant or pet lap holder and use thereof during flight;
FIGS. 6A-B illustrate a collapsible pet holder and corresponding seat;
FIGS. 7A-B illustrate an aircraft cabin arrangement including dedicated pet and family passenger compartments; and
FIGS. 8A-C illustrate gate and aircraft pet containment solutions and tracking.

### DETAILED DESCRIPTION OF EXEMPLARY EMBODIMENTS

The inventive concepts are described hereinafter with reference to the accompanying drawings in which exemplary embodiments are shown. However, the inventive concepts may be embodied in many different forms and should not be construed as limited to the representative embodiments set forth herein.

The inventive concepts disclosed herein are generally directed to cabin arrangements including dedicated passenger seating classes equipped with amenities that cater to the specific needs of passengers travelling with pets or service animals. Separation is provided between the dedicated passenger seating classes and other seating classes not dedicated for any particular passenger type, for example, general seating classes, premium seating classes, economy seating classes, etc. Separation may take the form of physical separation in terms of physical location within the cabin, physical separation achieved with fixed or movable partitions, acoustic separation using sound deadening materials or electronic noise cancelling equipment, etc., visual separation, odor barriers, etc. Separation between dedicated and non-dedicated passenger seating classes may include one or more or any combination of the above manners of separation, with an exemplary goal being to prevent disruptions between passenger in different seating classes.

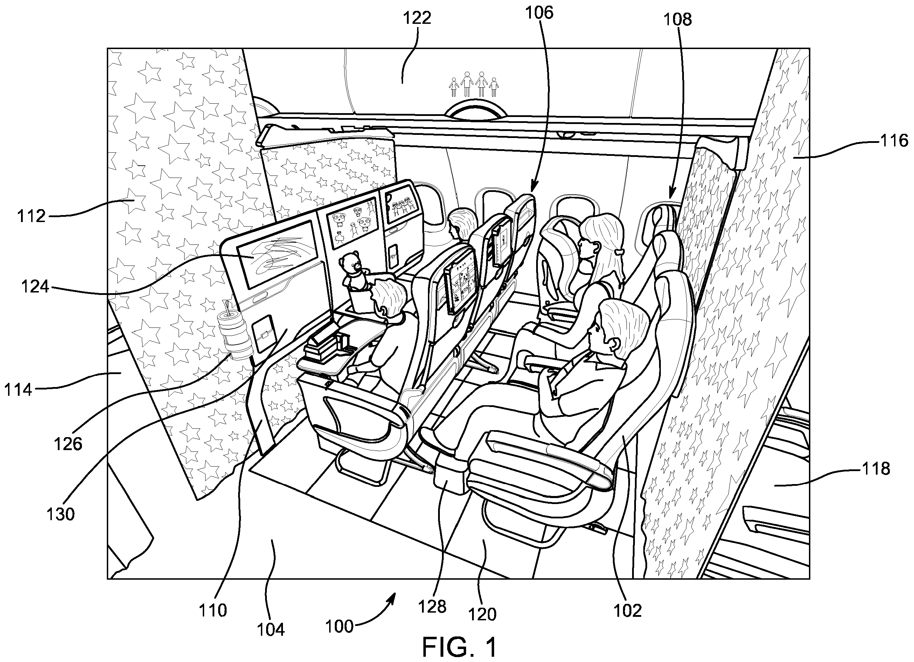

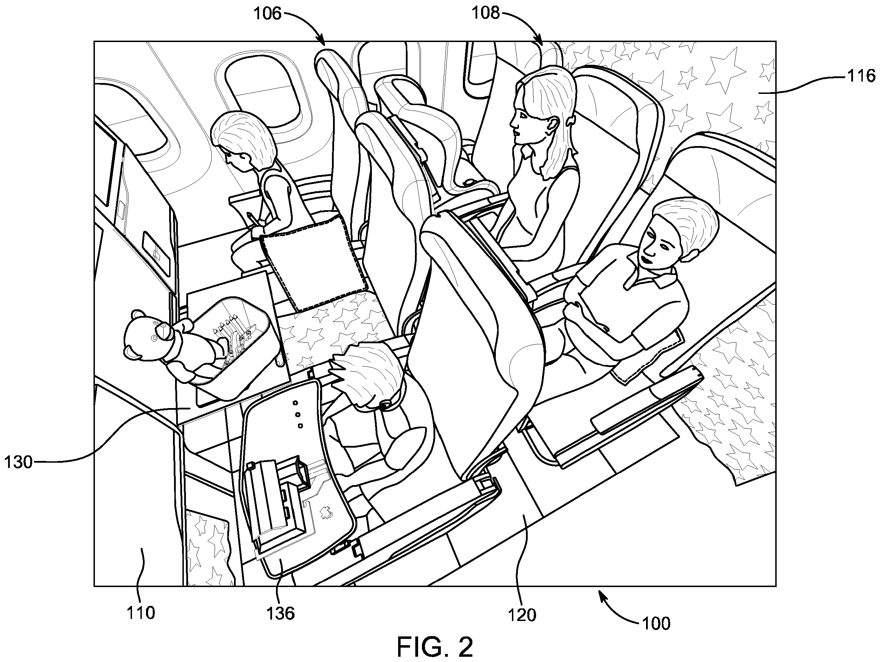

As an example, that is not part of the inventive concept, FIGS. 1 and 2 Ilustrate a dedicated passenger seating class 100 dedicated for use by a passenger travelling with an infant or child, for example, a family travelling with at least one child, a single parent travelling with at least one child, children travelling with other children or alone, etc. The passenger seating class 100, also referred to herein as a "family seating class", may be occupied by passengers that are related or unrelated. For example, the entire family seating class can be further divided into smaller sections each reserved for a single family travelling together. Multiple family seating classes can also be strategically positioned within the interior of the aircraft.

The passenger seating class 100 as shown includes two rows three laterally-adjacent passenger seats 102 arranged laterally adjacent a longitudinal aisle 104 and facing a direction of aircraft travel. The forward row of seats 106 is longitudinally aligned with the aft row of seats 108 such that the seatbacks of the forward row of seats 106 can serve as mounting locations for tray tables, tablet holders, video monitors, storage pockets, etc. serving passenger seated in the aft row of seats 108.

A fixed, floor-mounted partition 110 is positioned directly forward of the forward row of seats 106 and can be equipped with at least one amenity serving the needs of an infant or child, as discussed in detail below. A forward or first privacy partition 112 is positioned immediately forward of the floor-mounted partition 110 and serves to separate the dedicated passenger seating class 100 from a non-dedicated seating class 114 immediately forward of the first privacy partition 112. A rear or second privacy partition 116 positioned immediately aft of the aft row of seats 108 separates the dedicated passenger seating class 100 from another non-dedicated passenger seating class 118 that may be the same or different from the forward non-dedicated passenger seating class 114. Alternatively, the forward and rear privacy partitions 112, 116 can be used to separate the dedicated passenger seating class 100 from other like dedicated passenger seating classes 100, lavatories, galleys, service areas, cockpit, etc.

The forward and rear privacy partitions 112, 116 can be fixed or moveable or a combination thereof. As shown, the forward and rear privacy partitions 112, 116 extend from floor-to-ceiling adjacent the aisle 104 and from floor-to-stowage compartment adjacent the fuselage so as to substantially form a continuous barrier. Each of the forward and rear privacy partitions 112, 116 can be made from any material including, but not limited to, transparent materials, translucent materials, opaque materials, rigid materials, flexible materials, fabrics, etc., all which may or may not include sound-deadening coatings, fillers or additives, odor blocking coatings, fillers or additives, and like materials.

The dedicated passenger seating class 100 can have a first decorative theme the same as or different from a second decorative theme of the other non-dedicated passenger seating classes in the cabin. In the exemplary embodiment shown, the decorative theme of the dedicated passenger seating class 100 is colorful and includes multi-colored privacy partitions 112, 116 having a child-friendly pattern, multicolored floor-mounted partition 110, and multi-colored tile flooring 120. The floor-mounted partition 110 can be made from high impact plastic for durability and cleanability. The flooring 120 can include rubber tiles or carpet squares for cleanability and ease of replacement. Suitable flooring materials include, but are not limited to, FAA-approved, slip-resistant, fire-resistant materials such as vinyl, rubber and like materials. The flooring can be textured for slip-resistance, and can be in the form of a sheet supplied in rolls. The theme of the non-dedicated passenger seating classes can include more subdued color schemes as typical of conventional seating classes.

The dedicated passenger seating class 100 can include overhead stowage compartments or bins 122 indicated for use only by passengers seated in the dedicated passenger seating class 100. The non-dedicated passenger seating classes can be equipped with overhead stowage compartments indicated for use only by passengers seated in the non-dedicated seating areas. Overhead stowage compartments in the dedicated passenger seating class 100 can be sized and shaped to accommodate specific items including, but not limited to, strollers, car seats, pack-and-plays, pet carriers, etc.

The floor-mounted partition 110 can serve as the mounting location for drawing boards 124 for use by passengers directly facing the partition 110. Suitable examples of drawing boards include, but are not limited to, dry erase boards and chalk boards for reusability and cleanability. A container holder 126 can be located to one side of the floor-mounted partition 110 configured to hold beverage containers, bottles, sippy cups, wipes, etc. for use by passengers seated in the dedicated passenger seating class 100 as well as the flight crew.

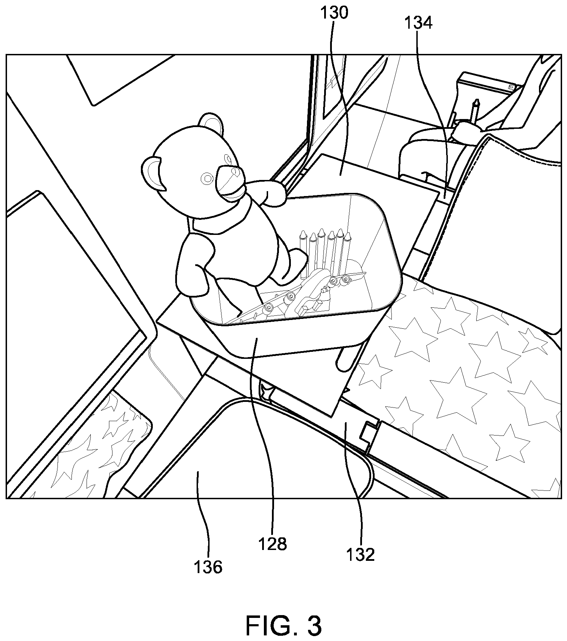

A foot stool 128, that is not part of the inventive concept, can serve in one orientation to support a child's feet, as best shown in FIG. 1, while in a second orientation can be used to store toys, drawing implements, interlocking plastic bricks, etc., as best shown in FIG. 3. The foot rests 128 can be removable and stackable, and can secure around/to track fasteners, luggage retaining bars, or other floor or seat structure to secure the foot rest in place. A table 130, mounted to the floor-mounted partition 110, is configured to pivot between a stowed position flush against the front face of the floor-mounted partition 110 and a deployed overseat position wherein the table 130 directly engages, spans, and is supported by the left-hand and right-hand armrests (132, 134) of the passenger seat served by the table 130.

As best shown in FIG. 2, a tray table 136, which is also not part of the inventive concept, deployable from within one of the seat armrests (132, 134) can be topped with a sheet 138 including features for engaging interlocking plastic bricks, for example, Lego®, Duplo® or Mega Blocks® compatible. The building blocks themselves can be stored in a foot stool 128.

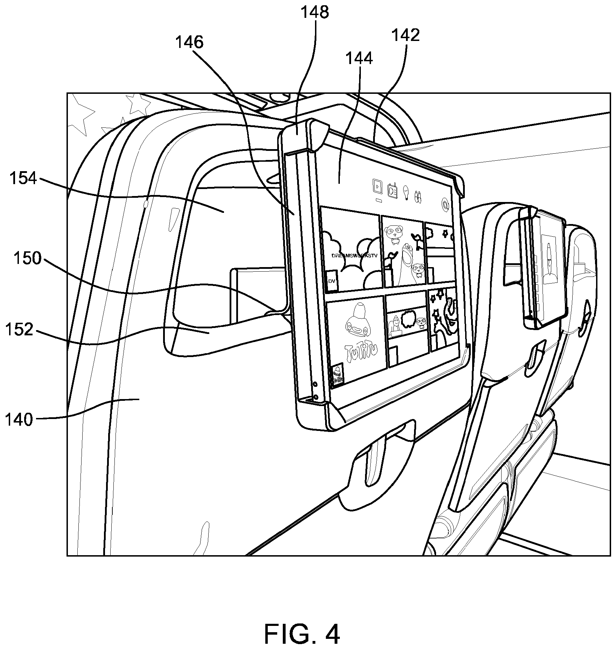

As shown, as another illustrative example not part of the inventive concept, in FIG. 4, each passenger seatback 140 can be equipped with a tablet holder 142 configured to engage each of the four corners of the tablet 144 held therein. In the exemplary embodiment shown, the tablet holder 142 includes a planar base 146, corner retainers 148 made from a resiliently deformable material, and a flange 150 perpendicular to the base 146 arranged to seat and be supported upon a ledge 152 of a seatback pocket 154. Tablets may be provided by the airline or can be carried aboard by passengers. Various sized tablet holders can be removably installed depending on the tablet size.

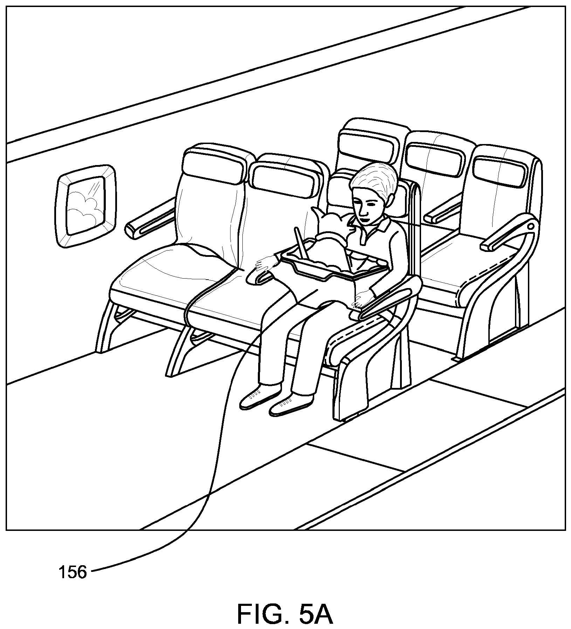

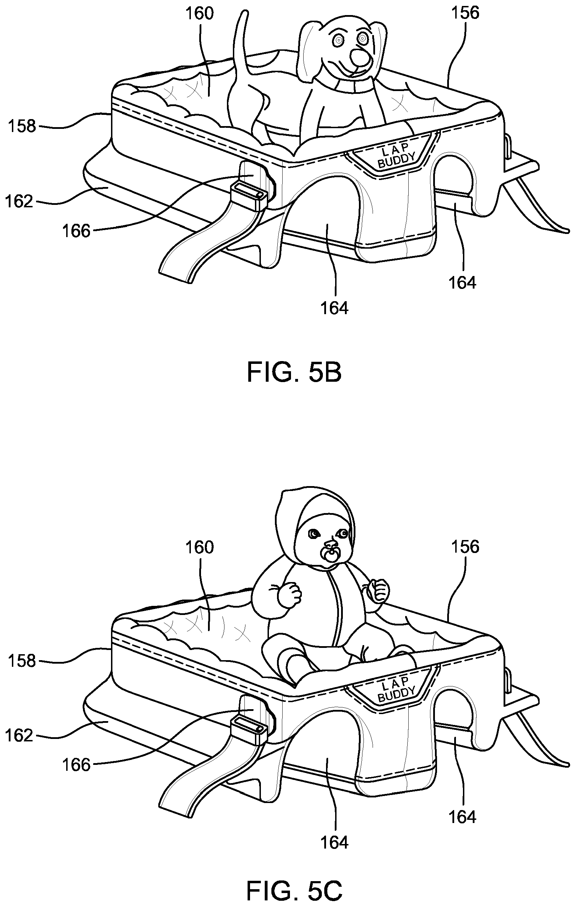

FIGS. 5A-C illustrate a lap holder 156 amenity, that also is not part of the inventive concept, for use during flight. The lap holder 156 generally includes an upper portion 158 including a cushioned tray 160 and a lower portion 162 including leg recesses 164 and seat belt receiving openings 166. The lap holder 156 can be used to hold an infant or pet during flight. As used herein, the term "pet" includes all animals including service animals. In use, the lap holder 156 is positioned over the user's legs, the existing seat belt engaged in the lap holder 156, and the child or pet held comfortably in the cushioned tray 160. The entire assembly 156 can be cushioned for comfort and safety.

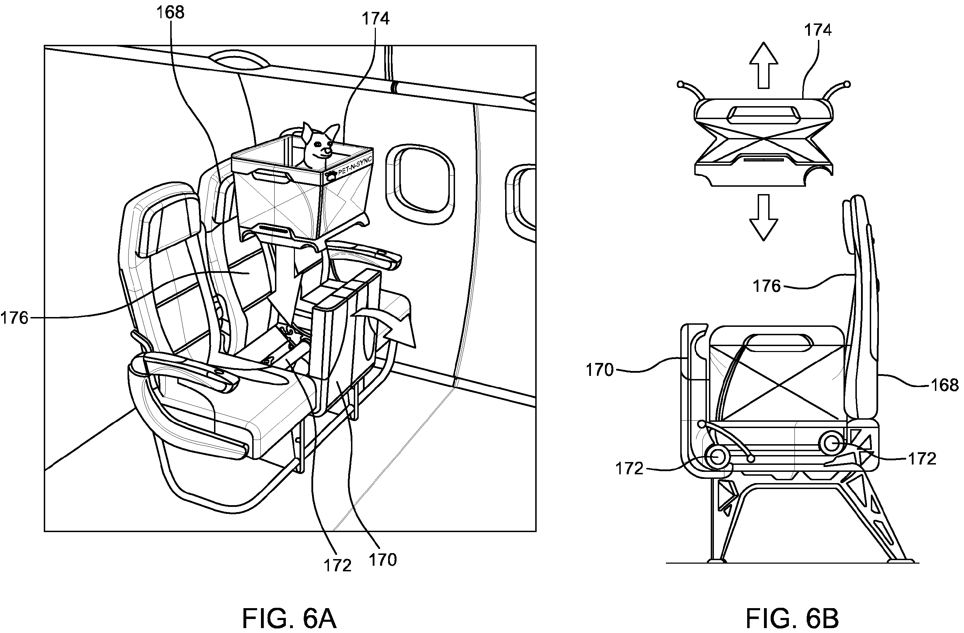

FIGS. 6A-B illustrate another exemplary embodiment of a pet carrier. In this embodiment, a particular passenger seat 168 positioned in the dedicated passenger seating class includes a seat bottom 170 configured to pivot forward to expose underlying seat beams 172. The amenity is a collapsible pet carrier 174 having bottom features configured to engage the exposed seat beams 172 such that when the collapsible pet carrier 174 is installed on the exposed seat beams 172 the collapsible pet carrier 174 is maintained between an underside of the seat bottom 170 and a forward face of a seatback 176 of the passenger seat 168.

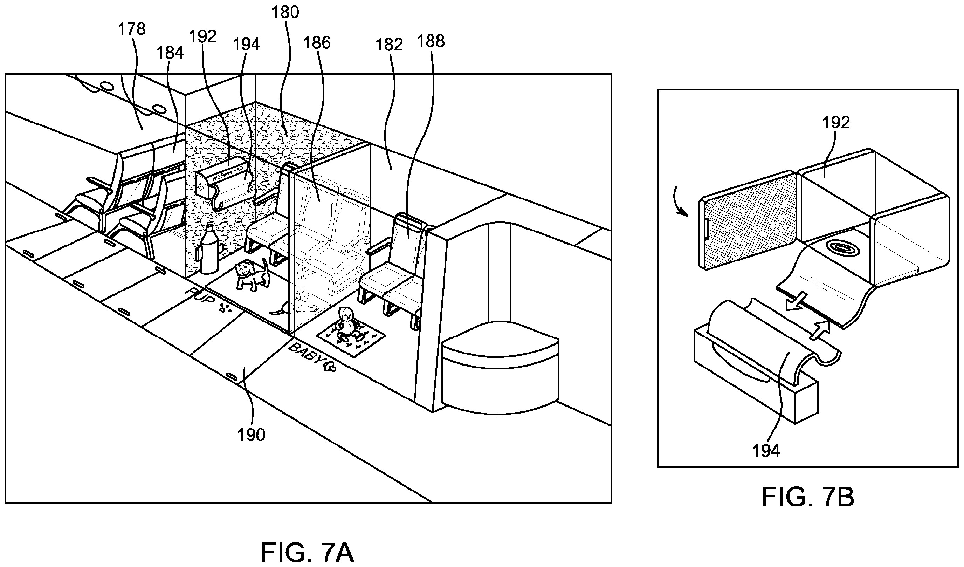

FIGS. 7A-B illustrate an exemplary cabin arrangement, also not forming part of the inventive concept, including a non-dedicated passenger seating class 178, a first dedicated passenger seating class 180 dedicated for passengers travelling with pets, and a second dedicated passenger seating class 182 dedicated for passengers travelling with a child. While the passenger seats 184 in the non-dedicated passenger seating class 178 are forward facing (i.e. face the direction of aircraft travel), the passenger seats 186, 188 in the first and second dedicated passenger seating classes 180, 182 face the longitudinal aisle 190. The seating classes 178, 180, 182 can be separated with partitions, and in a particular embodiment, can be closed off with a door. A dispenser 192 configured to dispense disposable mats 194 can be installed within at least one of the first and second dedicated passenger seating classes 180, 182.

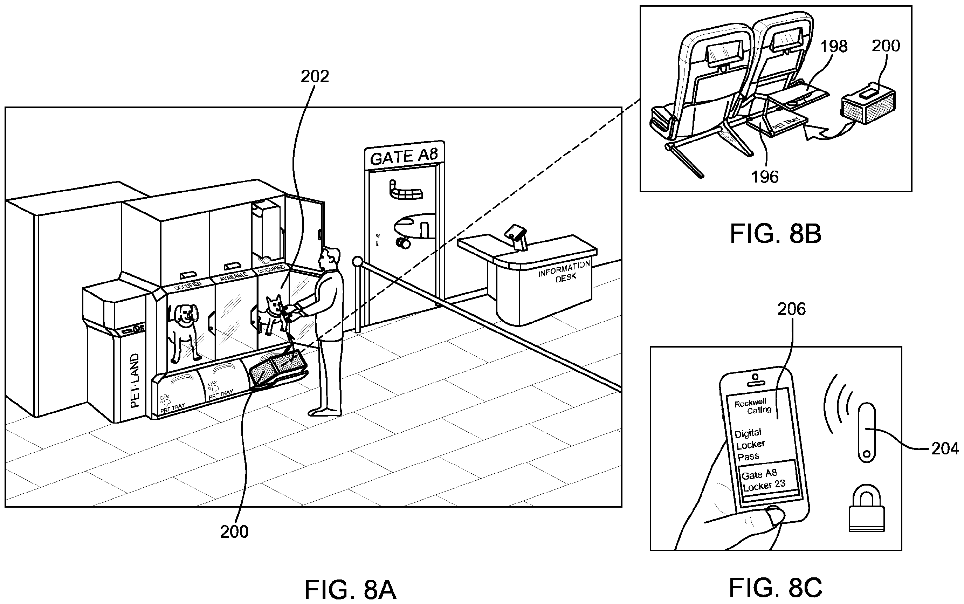

FIGS. 8A-C illustrate a pet containment solution generally including an amenity in the form of a lower tray 196 spaced below and supported by an upper seatback tray table 198, wherein dedicated space is provided between the upper and lower trays 198, 196 for stowing a pet carrier 200 elevated off the floor. The pet carrier 200 can be supplied by the airline for use during a flight. Pet carriers 200 can be supplied in storage lockers 202 located at the gate or elsewhere in the terminal. Such a solution allows a passenger to arrive at the airport without a carrier, obtain a carrier from the carrier kiosk, and stow the pet in the carrier 200 in the space provided without sacrificing convention seat stowage locations. The pet carrier 200 can be equipped with a tracking sensor 204 locatable with a downloadable tracking application 206. Pets can also be temporarily stored in the lockers 202 and the application function to indicate the locked/unlocked status of the locker 202.

The foregoing description provides embodiments of the invention by way of example only. It is envisioned that other embodiments may perform similar functions and/or achieve similar results.

## Claims

1. An aircraft cabin arrangement, comprising:
a first passenger seating class (114); and
a second passenger seating class (100) separated from the first passenger seating class (114) and equipped with at least one amenity (156, 174) dedicated to a need of a pet; and
a privacy partition separating the first (114) and second (100) passenger seating classes, the privacy partition providing at least one of a visual, an acoustic, and an odor barrier between the first (114) and second (100) passenger seating classes;
**characterized in that** the aircraft cabin arrangement further comprises a passenger seat (168) positioned in the second passenger seating class (100) comprising a seat bottom (170) configured to pivot forward to expose underlying seat beams (172), and wherein the at least one amenity is a collapsible pet carrier (174) comprising bottom features configured to engage the exposed seat beams (172) such that when the collapsible pet carrier (174) is installed on the exposed seat beams (172) the collapsible pet carrier (174) is maintained between an underside of the seat bottom (170) and a forward face of a seatback of the passenger seat (168).

2. The aircraft cabin arrangement of claim 1, wherein the first passenger seating class (114) includes at least one row of passengers seats arranged facing in a direction of aircraft travel, and the second passenger seating class (100) includes at least one row of passenger seats facing in a direction of an aisle (190).

3. The aircraft cabin arrangement of claim 1, wherein the second passenger seating class (100) is reserved for passengers traveling with a pet.

4. The aircraft cabin arrangement of claim 1, further comprising first overhead stowage compartments dedicated for use by passengers seated in the first seating class (114), and second overhead stowage compartments (122) dedicated for use by passengers seated in the second passenger seating class (100).

5. The aircraft cabin arrangement of claim 1, in addition to the pet carrier comprising at least one additional amenity further comprising a floor-mounted partition (110) arranged facing a row of seats (106) in the second passenger seating class (100), the floor-mounted partition (110) comprising at least one of a drawing board (124), a container holder (126), and a tray table (130), the tray table stowable against the floor-mounted partition (110) and deployable to an over-seat position supported on left- and right-hand armrests of a passenger seat served by the tray table (130).

6. The aircraft cabin arrangement of claim 1, in addition to the pet carrier comprising at least one additional amenity, being a lower tray (196) spaced below and supported by an upper seatback tray table (198), wherein dedicated space is provided between the upper and lower trays for stowing a pet carrier elevated off a floor, the pet carrier provided by an airline for use during a flight.

7. A method of minimizing disruptions between aircraft passengers travelling with pets and aircraft passengers travelling without pets, the method comprising:
positioning a first passenger seating class (114) in a first region of an aircraft interior; and
positioning a second passenger seating class (100) in a second region of the aircraft interior separated from the first region;
wherein a privacy partition is provided to separate the first (114) and second (100) passenger seating classes, the privacy partition providing at least one of a visual, an acoustic, and an odor barrier between the first (114) and second (100) passenger seating classes;
the second passenger seating class (100) dedicated for use by passengers travelling with pets and equipped with at least one amenity (156, 174) found only in the second passenger seating class (100) and dedicated to serve a need of a pet,
**characterized in that** the aircraft cabin arrangement further comprises a passenger seat (168) positioned in the second passenger seating class (100) comprising a seat bottom (170) configured to pivot forward to expose underlying seat beams (172), and wherein the at least one amenity is a collapsible pet carrier (174) comprising bottom features configured to engage the exposed seat beams (172) such that when the collapsible pet carrier (174) is installed on the exposed seat beams (172) the collapsible pet carrier (174) is maintained between an underside of the seat bottom (170) and a forward face of a seatback of the passenger seat (168).

## Patentansprüche

1. Flugzeugkabinenanordnung, Folgendes umfassend:
eine erste Passagiersitzklasse (114) und
eine zweite Passagiersitzklasse (100), die von der ersten Passagiersitzklasse (114) getrennt ist und mit mindestens einer Zusatzleistung (156, 174) ausgestattet ist, die auf die Bedürfnisse eines Haustiers abgestimmt ist; und
eine Privatsphäretrennwand, die die erste (114) und zweite (100) Passagiersitzklasse voneinander trennt, wobei die Privatsphäretrennwand eine visuelle, akustische und/oder Geruchsbarriere zwischen der ersten (114) und zweiten (100) Passagiersitzklasse vorsieht;
**dadurch gekennzeichnet, dass** die Flugzeugkabinenanordnung ferner einen Passagiersitz (168) umfasst, der in der zweiten Passagiersitzklasse (100) angeordnet ist und eine Sitzfläche (170) umfasst, die dazu ausgelegt ist, sich nach vorn zu verschwenken, um darunterliegende Sitzbalken (172) freizulegen, und wobei die mindestens eine Zusatzleistung ein zusammenklappbares Tiertrageelement (174) ist, das Bodenmerkmale umfasst, die dazu ausgelegt sind, in die freigelegten Sitzbalken (172) einzugreifen, sodass, wenn das zusammenklappbare Tiertrageelement (174) auf den freigelegten Sitzbalken (172) montiert ist, das zusammenklappbare Tiertrageelement (174) zwischen einer Unterseite der Sitzfläche (170) und einer Vorderseite einer Rückenlehne des Passagiersitzes (168) gehalten wird.

2. Flugzeugkabinenanordnung nach Anspruch 1, wobei die erste Passagiersitzklasse (114) mindestens eine Reihe Passagiersitze umfasst, die in Flugrichtung ausgerichtet sind, und die zweite Passagiersitzklasse (100) mindestens eine Reihe Passagiersitze umfasst, die in Richtung eines Ganges (190) ausgerichtet sind.

3. Flugzeugkabinenanordnung nach Anspruch 1, wobei die zweite Passagiersitzklasse (100) für Passagiere reserviert ist, die mit einem Haustier reisen.

4. Flugzeugkabinenanordnung nach Anspruch 1, ferner erste Überkopfgepäckfächer, die für die Verwendung durch Passagiere, die in der ersten Passagiersitzklasse (114) sitzen, ausgerichtet sind, und zweite Überkopfgepäckfächer (122), die für die Verwendung durch Passagiere, die in der zweiten Passagiersitzklasse (100) sitzen, ausgerichtet sind, umfassend.

5. Flugzeugkabinenanordnung nach Anspruch 1, zusätzlich zum Tiertrageelement mindestens eine zusätzliche Zusatzleistung umfassend, die ferner eine am Boden montierte Trennwand (110) umfasst, die einer Sitzreihe (106) in der zweiten Passagiersitzklasse (100) zugewandt ist, wobei die am Boden montierte Trennwand (110) eine Maltafel (124), eine Behälterhalterung (126) und/oder einen Klapptisch (130) umfasst, wobei der Klapptisch gegen die am Boden montierte Trennwand (110) verstaubar ist und in eine Übersitzposition ausklappbar ist, die von der linken und rechten Armlehne eines zugehörigen Passagiersitzes des Klapptischs (130) getragen wird.

6. Flugzeugkabinenanordnung nach Anspruch 1, zusätzlich zu dem Tiertrageelement mindestens eine zusätzliche Zusatzleistung umfassend, die ein niedrigerer Tisch (196) ist, der unter einem oberen Rückenlehnenklapptisch (198) beabstandet ist und davon getragen wird, wobei ein zweckbestimmter Raum zwischen dem oberen und unteren Klapptisch dafür vorgesehen ist, ein Tiertrageelement über dem Boden zu verstauen, wobei das Tiertrageelement von einer Fluggesellschaft zur Verwendung während des Flugs bereitgestellt wird.

7. Verfahren zum Minimieren von Störungen zwischen Flugzeugpassagieren, die mit Haustieren reisen, und Flugzeugpassagieren, die ohne Haustiere reisen, wobei das Verfahren Folgendes umfasst:
Anordnen einer ersten Passagiersitzklasse (114) in einem ersten Bereich eines Flugzeuginnenraums und
Anordnen einer zweiten Passagiersitzklasse (100) in einem zweiten Bereich des Flugzeuginnenraums, der vom ersten Bereich getrennt ist;
wobei eine Privatsphäretrennwand vorgesehen ist, um die erste (114) und zweite (100) Passagiersitzklasse voneinander zu trennen, wobei die Privatsphäretrennwand eine visuelle, akustische und/oder Geruchsbarriere zwischen der ersten (114) und der zweiten (100) Passagiersitzklasse vorsieht; wobei die zweite Passagiersitzklasse (100) zur Verwendung durch Passagiere, die mit Haustieren reisen, bestimmt ist und mit mindestens einer Zusatzleistung (156, 174) ausgestattet ist, die nur in der zweiten Passagiersitzklasse (100) zu finden ist und auf die Bedürfnisse eines Haustiers abgestimmt ist,
**dadurch gekennzeichnet, dass** die Flugzeugkabinenanordnung ferner einen Passagiersitz (168) umfasst, der in der zweiten Passagiersitzklasse (100) angeordnet ist und eine Sitzfläche (170) umfasst, die dazu ausgelegt ist, sich nach vorn zu verschwenken, um darunterliegende Sitzbalken (172) freizulegen, und wobei die mindestens eine Zusatzleistung ein zusammenklappbares Tiertrageelement (174) ist, das Bodenmerkmale umfasst, die dazu ausgelegt sind, in die freigelegten Sitzbalken (172) einzugreifen, sodass, wenn das zusammenklappbare Tiertrageelement (174) auf den freigelegten Sitzbalken (172) montiert ist, das zusammenklappbare Tiertrageelement (174) zwischen einer Unterseite der Sitzfläche (170) und einer Vorderseite einer Rückenlehne des Passagiersitzes (168) gehalten wird.

## Revendications

1. Agencement de cabines d'aéronef, comprenant :
une première classe de sièges passagers (114) ; et
une deuxième classe de sièges passagers (100) séparée de la première classe de sièges passagers (114) et équipée d'au moins un équipement (156, 174) destiné à répondre à un besoin d'un animal de compagnie ; et
une cloison d'intimité séparant les première (114) et deuxième (100) classes de sièges passagers, la cloison d'intimité fournissant une barrière visuelle, et/ou acoustique et/ou contre les odeurs entre les première (114) et deuxième (100) classes de sièges passagers ;
**caractérisé en ce que** l'agencement de cabines d'aéronef comprend en outre un siège passager (168) positionné dans la deuxième classe de sièges passagers (100) comprenant une assise de siège (170) configurée pour pivoter vers l'avant afin d'exposer les poutres de siège sous-jacentes (172), et
dans lequel l'au moins un équipement est un support pliable pour animal de compagnie (174) comprenant des éléments de fond configurés pour s'engager avec les poutres de siège exposées (172) de sorte que lorsque le support pliable pour animal de compagnie (174) est installé sur les poutres de siège exposées (172) le support pliable pour animal de compagnie (174) soit maintenu entre une face inférieure de l'assise de siège (170) et une face avant d'un dossier de siège du siège passager (168).

2. Agencement de cabines d'aéronef de la revendication 1, dans lequel la première classe de sièges passagers (114) comporte au moins une rangée de sièges passagers agencés orientée dans une direction de déplacement d'aéronef, et la deuxième classe de sièges passagers (100) comporte au moins une rangée de sièges de passagers orientée dans une direction d'un couloir (190).

3. Agencement de cabines d'aéronef de la revendication 1, dans lequel la deuxième classe de sièges passagers (100) est réservée aux passagers voyageant avec un animal de compagnie.

4. Agencement de cabines d'aéronef de la revendication 1, comprenant en outre des premiers compartiments de rangement suspendus destinés à être utilisés par des passagers assis dans la première classe de sièges (114), et des deuxièmes compartiments de rangement suspendus (122) destinés à être utilisés par des passagers assis dans la deuxième classe de sièges passagers (100).

5. Agencement de cabines d'aéronef de la revendication 1, comprenant, en plus du support pour animal de compagnie, au moins un équipement supplémentaire comprenant en outre une cloison montée sur plancher (110) agencée en face d'une rangée de sièges (106) dans la deuxième classe de sièges passagers (100), la cloison montée sur plancher (110) comprenant au moins l'un(e) parmi une planche à dessin (124), un porte-récipient (126) et une table à plateau (130), la table à plateau pouvant être rangée contre la cloison montée sur plancher (110) et pouvant être déployée sur une position au-dessus de siège supportée sur les accoudoirs gauche et droit du siège passager desservi par la table à plateau (130).

6. Agencement de cabines d'aéronef de la revendication 1, comprenant, en plus du support pour animal de compagnie, au moins un équipement supplémentaire, étant un plateau inférieur (196) espacé en dessous et supporté par une table à plateau de dossier de siège supérieur (198), où un espace dédié est prévu entre les plateaux supérieur et inférieur pour ranger un support pour animal de compagnie surélevé par rapport à un plancher, le support pour animal de compagnie étant fourni par une compagnie aérienne pour une utilisation pendant un vol.

7. Procédé pour minimiser les perturbations entre les passagers d'aéronef voyageant avec des animaux de compagnie et les passagers d'aéronefs voyageant sans animaux de compagnie, le procédé comprenant le fait :
de positionner une première classe de sièges passagers (114) dans une première région d'un intérieur d'aéronef ; et
de positionner une deuxième classe de sièges passagers (100) dans une deuxième région de l'intérieur d'aéronef séparée de la première région ;
dans lequel une cloison d'intimité est prévue pour séparer les première (114) et deuxième (100) classes de sièges passagers, la cloison d'intimité fournissant une barrière visuelle, et/ou acoustique et/ou contre les odeurs entre les première (114) et deuxième (100) classes de sièges passagers ;
la deuxième classe de sièges passagers (100) destinée à être utilisée par les passagers voyageant avec des animaux de compagnie et équipée d'au moins un équipement (156, 174) trouvé uniquement dans la deuxième classe de sièges passagers (100) et destinée à répondre aux besoins d'un animal de compagnie,
**caractérisé en ce que** l'agencement de cabines d'aéronef comprend en outre un siège passager (168) positionné dans la deuxième classe de sièges passagers (100) comprenant une assise de siège (170) configurée pour pivoter vers l'avant pour exposer les poutres de siège sous-jacentes (172), et
dans lequel l'au moins un équipement est un support pliable pour animal de compagnie (174) comprenant des éléments de fond configurés pour s'engager avec les poutres de siège exposées (172) de sorte que lorsque le support pliable pour animal de compagnie (174) est installé sur les poutres de siège exposées (172), le support pliable pour animal de compagnie (174) soit maintenu entre une face inférieure de l'assise de siège (170) et une face avant d'un dossier de siège du siège passager (168).
